# EUROPEAN PATENT SPECIFICATION

(11) **EP 3 574 540 B1**
(45) Date of publication and mention of the grant of the patent: **23.04.2025**
(21) Application number: 18704714.7
(22) Date of filing: 26.01.2018
(51) Int. Cl.: H01M 4/62, H01M 4/68, H01M 10/08, H01M 10/10, H01M 4/14

(54) **BATTERY PASTE AND ELECTROLYE COMPOSITIONS AND ELECTROCHEMICAL CELL FOR USE THEREWITH**
BATTERIEPASTE UND ELEKTROLYSEZUSAMMENSETZUNGEN UND ELEKTROCHEMISCHE ZELLE ZUR VERWENDUNG DAMIT
PÂTE DE BATTERIE ET COMPOSITIONS D'ÉLECTROLYTE ET CELLULE ÉLECTROCHIMIQUE DESTINÉE À ÊTRE UTILISÉE AVEC CELLES-CI

(30) Priority: 27.01.2017 US 201762451523 P; 03.02.2017 US 201762454305 P
(43) Date of publication of application: 04.12.2019
(73) Proprietor: CPS Technology Holdings LLC, New York, New York 10281 (US)
(72) Inventor: BOSE, Deepan, Chakkaravarthi, Milwaukee WI 53217 (US); RINCON CALZADA, Jose, Gabriel, Monterrey Nuevo Leon CP 64910 (MX); ALVAREZ VARELA, Reyes, Santos, Guadalupe Nuevo Leon CP 67190 (MX)
(74) Representative: Meissner Bolte Partnerschaft mbB
(86) International application number: PCT/US2018/015422
(87) International publication number: WO 2018/140711

(56) References cited:
- JP-A- 2010 118 249
- JP-A- 2011 165 378
- US-A- 5 871 862

## Description

This application claims priority to United States Provisional Patent Application, Serial No. 62/451 ,523, filed January 27, 2017, entitled BATTERY PASTE AND ELECTROLYTE COMPOSITIONS AND ELECTROCHEMICAL CELL FOR USE THEREWITH; this application also claims priority to United States Provisional Patent Application, Serial No. 62/454,305, filed February 3, 2017, entitled BATTERY PASTE AND ELECTROLYTE COMPOSITIONS AND ELECTROCHEMICAL CELL FOR USE THEREWITH.

### FIELD

The invention(s) described herein relate to the field of battery paste and electrolyte compositions. More specifically the invention(s) described herein relate to an AGM lead acid battery having said battery paste and electrolyte compositions

### BACKGROUND

Lead acid batteries are known and are often used for starting- iighting-ign its on (SLI) functions as well as deep cycle (DC) related applications. Conventionally, lead acid batteries include electrically conductive positive and negative current collectors in the form of lead or lead-alloy grids. These current collectors or grids have a paste composition deposited, thereon, with the makeup or composition of the paste potentially varying based upon the make-up of the current collector (e.g., a negative paste on a negative grid and a positive paste on a positive grid). Lead acid batteries also include an electrolyte which is normally acidic in nature and commonly is or includes aqueous solutions of H2SO4. Lead acid batteries may also include a separator between grids and/or an absorbent glass mat (AOM) wrapped around one or more said grids.

A need exists for an electrochemical cell which provides improved performance in a flat plate AGM lead acid battery.

The document US 5,871,862 A relates to a battery paste composition and a lead-acid electrochemical cell which incorporates the composition. The cell includes a positive current collector and a negative current collector which are each coated with a paste containing one or more lead-containing compositions and a paste vehicle to form a positive plate and a negative plate.

The document JP 2010-118249 A discloses an unformed paste-type positive electrode plate and an unformed paste-type negative electrode plate, which are laminated via a separator.

The document JP 2011-165378 A relates to a method of manufacturing a lead storage battery which exhibits a high utilization rate of an active material of a positive electrode plate.

### SUMMARY

The present invention relates to an electrochemical cell according to independent claim 1, wherein further developments of the inventive electrochemical cell are provided in the corresponding sub-claims.

The present invention further relates to a lead acid battery according to claim 10, wherein further developments of the inventive lead acid battery are provided in claims 11 and 12.

Battery paste and electrolyte compositions are disclosed, as well as an electrochemical cell for use therewith, the combination of which provides improved performance in a flat plate AGM lead acid battery.

An electrochemical cell is disclosed. The electrochemical cell includes a flat positive plate composed of a grid formed of virgin lead or high purity lead or highly purified secondary lead and a positive battery paste disposed on the grid. The battery paste comprises a lead-containing composition, a positive plate paste vehicle, and a polyvinylsulfonate additive. A flat negative plate is also provided which is composed of a grid and a negative battery paste disposed on the grid. The battery paste comprises a lead-containing composition and a negative plate paste vehicle. An absorbent glass mat is interleaved between the flat positive plate and the flat negative plate and an electrolyte is provided in the container and retained in the absorbent glass mat. The electrolyte includes phosphoric acid.

A lead acid battery is also disclosed. The battery includes a container and a plurality of electrochemical cells within the container. The electrochemical cells have a plurality of flat positive plates each composed of a grid formed of virgin lead or high purity lead or highly purified secondary lead and a positive battery paste disposed on the grid, the battery paste comprising a lead-containing composition, a positive plate paste vehicle, and a polyvinylsulfonate additive. The electrochemical cells also have a plurality of flat negative plates each composed of a grid and a negative battery paste disposed on the grid, the battery paste comprising a lead-containing composition and a negative plate paste vehicle. An absorbent glass mat is interleaved between the flat positive plate and the flat negative plate. An electrolyte is provided in the container and retained in the absorbent glass mat. The electrolyte includes phosphoric acid. The plurality of flat positive plates and the plurality of flat negative plates are connected by intercell connectors and coupled to one or more terminals. A lid is provided on the container.

An additional lead acid battery is disclosed including a container and a plurality of electrochemical cells within the container. The electrochemical cells include a plurality of flat positive plates each composed of a grid formed of virgin lead or high purity lead or highly purified secondary lead and a positive battery paste disposed on the grid. The battery paste comprises a lead-containing composition, a positive plate paste vehicle, and a polyvinylsulfonate additive. The battery also includes a plurality of flat negative plates each composed of a grid and a negative battery paste disposed on the grid. The battery paste comprises a lead-containing composition, a negative plate paste vehicle, an expander, and a polyvinylsulfonate additive. An absorbent glass mat is interleaved between the flat positive plate and the flat negative plate. An electrolyte is provided in the container and retained in the absorbent glass mat. The electrolyte includes phosphoric acid, water, sulfuric acid, and sodium sulfate. The plurality of flat positive plates and the plurality of flat negative plates are connected by intercell connectors and coupled to one or more terminals. A lid is provided on the container.

These and other features and advantages of devices, systems, and methods according to this invention are described in, or are apparent from, the following detailed descriptions of various examples of embodiments.

### BRIEF DESCRIPTION OF DRAWINGS

Various examples of embodiments of the systems, devices, and methods according to this invention will be described in detail, with reference to the following figures, wherein:
FIG. 1 is a perspective, partially cut-away exploded view of one or more examples of a lead acid battery and electrochemical cell as described herein.
FIG. 2 is a front elevation, cut-away view of one or more examples of a plate for the battery or electrochemical cell of FIG. 1.
FIG. 3 is a partial cross-sectional view of the plate shown in FIG. 2, taken along line B-B of FIG. 2.

It should be understood that the drawings are not necessarily to scale. In certain instances, details that are not necessary to the understanding of the invention or render other details difficult to perceive may have been omitted. It should be understood, of course, that the invention is not necessarily limited to the particular embodiments illustrated herein.

### DETAILED DESCRIPTION

An improved electrochemical cell having a battery paste composition and electrolyte composition is described. More specifically, a flat plate AGM lead acid electrochemical cell for a battery having an improved paste composition and an electrolyte composition is described.

The electrochemical reaction that takes place within the electrochemical cell may be, in part, the result of the reaction of the various chemical compositions therein, including for example, the grid material, the battery paste composition, and the electrolyte. Various chemical compositions are further detailed herein as used in a flat plate AGM lead acid electrochemical cell and battery.

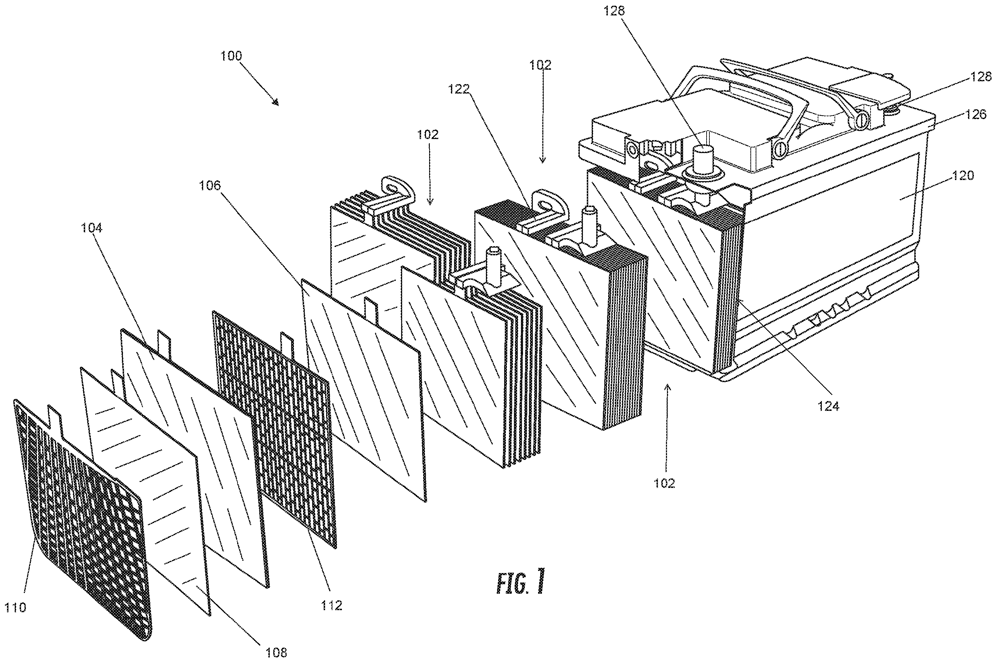

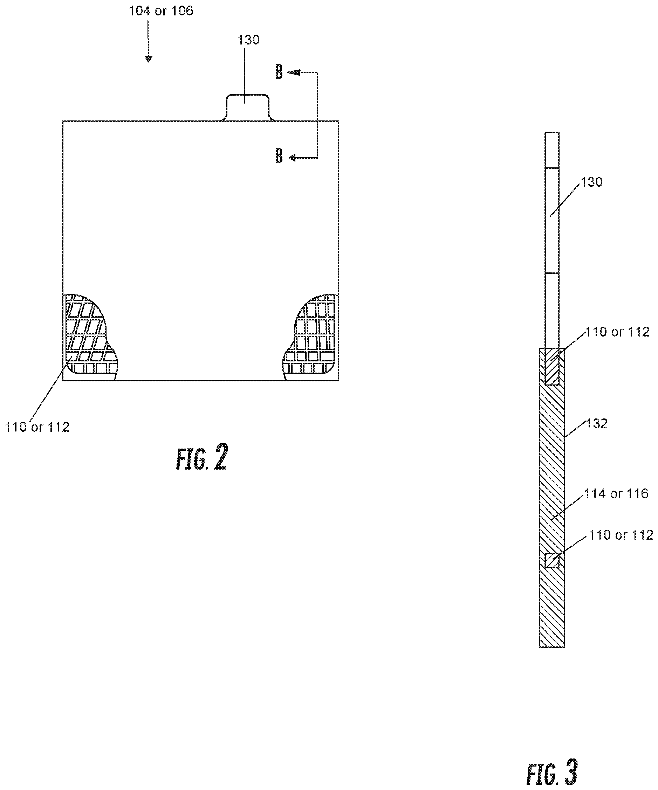

Generally, a battery 100 or electrochemical cell 102 is provided and shown in FIG. 1. The battery 100 is an AGM battery having positive and negative plates 104, 106 which are separated by an absorbent glass mat 108 that absorbs and holds the battery's acid or electrolyte and prevents it from flowing freely inside the battery. Referring to FIGS. 1-3, the plates 104, 106 include electrically-conductive positive or negative grids 110, 112 or current collecting members. Positive paste 114 is provided on the positive grid 110 and negative paste 116 is provided on the negative grid 112. More specifically, the positive plate 104 includes a positive grid 110 having or supporting a positive active material or paste 114 thereon, and in some examples of embodiments may include a pasting paper or a scrim 132; and the negative plate 106 includes a negative grid 112 having or supporting a negative active material or paste 116 thereon, and in some examples of embodiments may include a pasting paper or a scrim 132. Grid 110 or grids 110 and 112 are formed of pure or virgin lead or high purity lead or highly purified secondary lead. Positioned between the positive and negative plates 114, 116 is a separator 108. In a retained electrolyte-type battery system such as described herein, the separator 108 is a porous and absorbent glass mat (AGM). In some examples, the AGM 108 may also be used with an additional separator. As indicated, a pasting paper or pasting material or scrim 132 may also be used or provided on the plate to help retain the paste on the grid.

Individual battery cells or electrochemical cells 102 may be assembled by alternating one or more, and preferably a plurality of positive and negative plates 104, 106 and separators 108 to form a plate block 118. Each plate block 118 is positioned within a housing or container 120 of a battery 100 and connected by electrical connecting straps or intercell connectors 122 (e.g., cast on straps) to and between the cells 102. The intercell connectors 122 are connected to lugs 130 which extend from the grids 110, 112. Electrolyte 124 is included in the housing 120 and more specifically is retained at least in part within the separator or AGM 108. A lid 126 covers the housing or container 120. In an AGM battery, the lid 126 may be sealed to the container 120.

One or more positive and one or more negative terminals 128 may be provided. Such terminals typically include portions which may extend through the cover 126 and/or housing 120 and electrically couple to the intercell connectors 122 or electrochemical cells 102, depending upon the battery design. It will be recognized that a variety of terminal arrangements are possible, including top, side or corner configurations known in the art.

According to the invention, the plate (both positive and negative) 104, 106, which includes the grid 110 or 112, is a generally flat plate. The positive grid (or both positive and negative grids) 110, 112 is composed of lead which is virgin lead (Pb) (i.e., from a mine rather than recycled lead), or high purity lead, or highly purified secondary lead, or may be substantially pure or virgin lead. In one example, the lead may also include a small amount of tin (Sn) added to the lead which may provide improved fluidity of the metal and some corrosion resistance. According to one or more examples of embodiments, the lead may be approximately 99.9% lead. In one or more further examples of embodiments, tin in the range of approximately 0.1% to approximately 1.5% may be added to the lead.

A battery paste 114, 116 composition is provided on or supported by the one or more battery grids or current collectors 110, 112. In one or more examples, the paste 114 or 116 may be provided in a layer of a predetermined amount on the battery grid 110 or 112. An example of a suitable battery paste composition is disclosed in United States Patent No. 5,871,862. Generally, as described herein the battery paste composition comprises a positive paste 114 on the positive grid 110 or current collecting member (which forms the positive plate 104) and a negative paste 116 on the negative grid 112 or current collecting member (which forms the negative plate 106). To this end, the paste according to one or more examples of embodiments may be composed of virgin lead (Pb) (i.e., from a mine rather than recycled lead), or high purity lead, or highly purified secondary lead, or substantially pure or virgin lead. In one or more examples of embodiments, the lead may be approximately 99.9% to 99.99% lead. The paste composition(s) (e.g. the positive paste, the negative paste, or both pastes) may contain a specialized paste additive.

In more detail, the positive plate 104 contains a metal (e.g., lead) grid 110 with lead dioxide active material or paste 114 thereon. More specifically, the positive paste 114 disclosed herein generally includes at least one particulate lead-containing composition and a paste vehicle. Different materials may be used in connection with the lead-containing composition, with the present invention not being restricted to any particular materials or mixtures. The selected lead-containing composition or compositions may have a particle size of about 0.1-10 microns in a representative and non-limiting embodiment. One or more examples of lead-containing compositions which may be employed in the positive paste include, but are not limited to, finely-divided elemental Pb, PbO ("litharge" or "massicot"), Pb₃ O₄ ("red lead"), PbSO₄ ("lead sulfate" with the term "PbSO₄ " being defined to also include its associated hydrates), and mixtures thereof. These materials may be employed alone or in combination as determined by numerous factors, including for example, the intended use of the battery and the other materials employed in the battery. Accordingly, the term "lead-containing composition" is defined to encompass elemental lead, lead compounds, and mixtures thereof. The positive paste 114 also includes a paste vehicle which is primarily used as a carrier medium to produce the completed paste. In one or more examples of embodiments, water may be used as the paste vehicle. A representative positive paste 114 may include about 3-25% by weight vehicle therein. In addition, the positive paste 114 may likewise contain an aqueous solution of H₂ SO₄ therein (e.g., about 0.01-18M) as an optional ingredient. However, variations on the materials included in the positive paste and/or any particular amounts/concentrations of this material may not depart from the overall scope of the present invention.

As previously indicated, a specialized paste additive is provided in at least the positive paste 114, or in both the positive paste and the negative paste 116. This additive involves a polymeric composition, such as "polyvinylsulfonic acid" or the salts of this material (e.g. "polyvinylsulfonates"). For example, polyvinylsulfonic acid may be chemically characterized in accordance with the following representative formula:

(CH₂ [CH SO₃ H]ₓ H₁₋ₓ)ₙ

In this formula, x=0.01-1 and n=10-1000 in a preferred and non-limiting example of embodiments, with the term "polyvinylsulfonic acid" being defined to encompass all of the formulations included within these ranges. Likewise, the salts of polyvinylsulfonic acid (e.g. "polyvinylsulfonates") may be represented by the following formula:

(CH₂ [CH SO₃ M]ₓ H₁₋ₓ)ₙ

In the above-listed formula, M is an alkali metal or alkaline earth metal counterion preferably selected from the group consisting of Na⁺, K⁺, Li⁺, Ba⁺², Mg⁺², Ca⁺², and Sr⁺². Likewise, as noted above, x=0.01-1 and n=10-1000 in a preferred and non-limiting example of embodiments, with the term "polyvinylsulfonate" being defined to encompass all of the formulations included within these ranges.

Polyvinylsulfonic acid and polyvinylsulfonates are available from a number of commercial sources (listed below), and are generally classified as "water-soluble ionomers" (e.g. polymers with ionic groups). Likewise, these materials are also broadly characterized as "polyelectrolytes" with an average molecular weight in a non-limiting, representative embodiment of about 500-100,000. Polyvinylsulfonic acid and salts thereof (polyvinylsulfonates) are commercially available from many sources including but not limited to the Hoechst Company of Germany, Air Products Company of Allentown, Pa. (USA) and Nalco/Exxon of England (UK).

Polyvinylsulfonic acid and polyvinylsulfonates collectively provide numerous advantages when used in the paste compositions on the positive and/or negative current collecting members (e.g. grids) of an electrochemical cell. These benefits include, as non-limiting examples: the ability of these materials to function as "plasticizers" in which the sulfate groups therein effectively interlink particulate materials (e.g. the lead-containing compositions) in the pastes to produce a more cohesive paste product; an improvement in the overall charge capacity of the battery; an increase in battery cycle life; the production of more homogeneous, smooth, and uniform paste products which improves the overall efficiency of the paste application process; the control of extraneous crystal growth on the plates; and/or a general improvement in plate performance under normal and adverse (e.g. low temperature) operating conditions. Moreover, use of the claimed additive in the positive (and/or negative) paste generally improves the consistency of the paste. When added to the positive paste and/or negative paste, the additive may function as a "rheology modifier" which makes the paste smoother and more adhesive, thereby facilitating the paste application process.

The completed positive paste may have a typical density of about 3-5 g/cc. One example of a positive paste 114 containing the desired additive composition is provided in Table I:

**TABLE I**

| Ingredient | Amount (% by weight) |
|---|---|
| Particulate lead-containing composition (e.g. Pb₃ O₄) | about 70-95 |
| Paste additive (e.g. polyvinylsulfonic acid or a selected polyvinylsulfonate) | about 0.001-0.5 |
| Acid composition (e.g. H₂ SO₄) | about 0-5 |
| Paste vehicle (e.g. water) | balance (amount needed to make 100%) |
| | Total: 100% |

The information in Table I is presented for purposes of example only and one of skill in the art will understand that variations thereon may be made without departing from the overall scope of the present invention.

The negative plate 106 may be composed of a metal (e.g., lead) grid 112 with a spongy lead active material or paste 116 thereon. The negative paste 116 may, in a preferred embodiment, be substantially similar to the positive paste with certain exceptions as outlined below. Like the positive paste, the lead of the negative paste 116 may be a pure or virgin lead, or substantially pure or virgin lead. In this regard, the lead may be approximately 99.9% to 99.99% lead. Exemplary lead-containing compositions which may be employed in the negative paste 116 include but are not limited to finely-divided elemental Pb, PbO ("litharge" or "massicot"), Pb₃ O₄ ("red lead"), PbSO₄ ("lead sulfate" with the term "PbSO₄" being defined to also include its associated hydrates), and mixtures thereof. These materials may be employed alone or in combination as determined by numerous factors, including for example, the intended use of the battery and the other materials employed in the battery. Accordingly, the term "lead-containing composition" is defined to encompass elemental lead, lead compounds, and mixtures thereof.

If needed, the negative paste 116 may also include an optional "expander" which, for example, may be designed to promote paste uniformity and consistency, as well as long term or "cycling" performance. Representative materials suitable for this purpose include, but are not limited to, barium sulfate, carbon black, and lignosulfonate (which may consist of a non-water-soluble mononuclear phenylpropane derivative) and the like.

The completed negative paste 116 may have a typical density of about 3-5 g/cc. One example of a negative paste 116 containing the desired additive composition is provided in Table II:

**TABLE II**

| Ingredient | Amount (% by weight) |
|---|---|
| Particulate lead-containing composition (e.g. Pb₃ O₄) | about 70-95 |
| Paste additive (e.g. polyvinylsulfonic acid or a selected polyvinylsulfonate) | about 0.001-0.5 |
| Acid composition (e.g. H₂ SO₄) | about 0-5 |
| Expander (e.g. barium sulfate) | about 0-5 |
| Paste vehicle (e.g. water) | balance (amount needed to make 100%) |
| | Total: 100% |

The information in Table II is presented for purposes of example only and one of skill in the art will understand that variations thereon may be made without departing from the overall scope of the present invention.

It is also contemplated that the claimed additive may be absent from the negative paste and only present in the positive paste. To this end, the negative paste 116 without the additive may have the following example composition values: Particulate lead-containing composition: about 70-95% by weight; H₂ SO₄: about 0-5% by weight; Expander: about 0-5% by weight; and Paste vehicle (water): balance needed to make 100%.

As indicated, an electrolyte 124 is also provided in the battery 100. Generally, the electrolyte 124 may be a solution which is clear, colorless and free of particulate matter. The electrolyte 124 in one or more particular examples of embodiments may be composed of phosphoric acid which may be added to sulfuric acid and water. The electrolyte 124 according to one or more further examples of embodiments may be composed of phosphoric acid and/or sodium sulfate which are added to sulfuric acid and water. Preferably, the electrolyte 124 is composed of water, which may be deionized water, sulfuric acid, phosphoric acid, and sodium sulfate, and in some instances may include one or more impurities.

Phosphoric acid is present in the electrolyte 124 in a range of from 0.1 g/L to 0.5 g/L.

Various impurities, such as metal ions, may also be present. Examples of impurities may include, but are not limited to, Ag, As, Bi, Cd, Co, Cr, Cu, Fe, Mn, Mo, Ni, Pt, Sb, Se, Te, V, Zn, Chloride, TOC. Generally, in some examples the metal ions may not exceed a total concentration.

An electrolyte 124 as described above and used in association with a flat plate electrochemical cell 102 is unique to the present invention. More specifically, a unique flat plate AGM electrochemical cell 102 is described having a phosphoric acid in the electrolyte solution, and/or a phosphoric acid and sodium sulfate in the electrolyte solution. Such a combination has various advantages, including, for example improved performance of the electrochemical cell.

The electrochemical cell 102 includes an absorbent glass mat or AGM 108. The mat or AGM 108 may be formed of any commercially known or future developed material and generally comprises a woven or non-woven mat of fibers composed of polymer and/or glass, such as but not limited to very fine fiberglass. Electrolyte 124 is, in part, absorbed by the mat 108 between the plates 104, 106 and immobilized by the mat 108, while keeping the electrolyte 124 available to the plates 104, 106, thereby allowing a fast reaction between the electrolyte 124 and plate material. To this end, the positive and negative plates 104, 106 are separated by an absorbent glass mat 108 that absorbs and holds the electrolyte 124. The saturation ratio of the electrolyte 124 in the mat 108 is improved over existing devices.

A battery 100 having one or more electrochemical cells 102 of the type described herein is shown in FIG. 1. According to one or more examples of embodiments, the battery 100 is a lead acid storage battery. According to one or more further examples of embodiments, the lead acid storage battery 100 is a sealed lead acid battery or an AGM lead acid battery. While specific examples are described and illustrated, any secondary battery having the characteristics described herein may be acceptable for the purposes provided. The battery 100 in one or more examples of embodiments is configured to provide at least a portion of the power required to start or operate a vehicle and/or various vehicle systems. Further, it should be understood that the battery 100 may be utilized in a variety of applications not involving a vehicle, and all such applications are intended to be within the scope of the present disclosure.

As indicated, the battery 100 includes several electrochemical cells 102 which are provided in separate compartments of a container or housing 120. The plurality of electrochemical cells 102 are electrically connected by intercell connectors 122 and terminals 128 are provided which are electrically connected to the cells 102 and which may extend through the lid 126 or container 120. To this end, a cover or lid 126 is provided on the container 120, and may be sealed thereto. In various embodiments, the lid 126 and/or container 120 includes terminal bushings, fill tubes, vent openings, and the like, as is customary for AGM batteries.

One or more examples of production of an electrochemical cell 102 having the foregoing components will now be described. As indicated, production of a battery 100 or electrochemical cell 102 includes obtaining electrically-conductive positive and negative grids 110, 112 or current collecting members. Either or both the positive and negative grids 110, 112 are, in one or more examples of embodiments, formed of virgin lead or high purity lead or highly purified secondary lead. Using conventional paste application techniques, the positive paste 114 is applied to the positive current collecting member 110 on both sides thereof (and within the openings in the grid or current collecting member). In a similar manner, the negative paste 116 is applied to the negative current collecting member 112 on both sides thereof (and within the openings in the grid or current collecting member).

Once the positive and negative current collecting members 1 10, 1 12 are pasted in order to form the positive plate 104 and the negative plate 106, individual cells 102 may be assembled. To this end, one or more, and preferably a plurality of positive and negative plates 104, 106 are stacked together in an alternating manner, with a separator 108 positioned or interleaved between them or wrapped around one of said plates. In a retained electrolyte-type battery system such as disclosed herein, the separator 108 is a porous and absorbent mat (AGM) that is interleaved with the plates 104, 106 or wrapped around at least a portion of one of the plates. A pasting paper or pasting material or scrim 132 may also be used, placed upon the plate 104 or 106 between the plate and the mat 108 to help retain the paste 1 14 or 1 16 on the grid 1 10 or 1 12. Plate blocks 118 are formed by assembling a grouping of a plurality of positive and negative plates 104, 106 in the manner described.

The plate blocks 1 18 are then positioned within the housing or container 120, followed by connection of the electrical connecting straps or intercell connectors 122 (e.g., cast on straps) to and between the cells 102 and in particular to the respective lugs 130 on the grids; and electrolyte 124 addition (which may be retained within the separator member). The electrolyte solution is provided in the housing or container 120 between the electrode plates 104, 106 (e.g., absorbed within the separator mat 108). The lid 126 is then secured to the housing or container 120 followed by "formation" of the battery.

While a specific order of events is described for purposes of example, the invention is not limited thereto and variations in the order of events may be acceptable for the purposes provided.

As set forth above, an AGM battery having the foregoing chemical compositions provided in association with a flat plate electrochemical cell provides improved performance over existing devices.

As utilized herein, the terms "approximately," "about," "substantially", and similar terms are intended to have a broad meaning in harmony with the common and accepted usage by those of ordinary skill in the art to which the subject matter of this disclosure pertains.

It should be noted that references to relative positions (e.g., "top" and "bottom") in this description are merely used to identify various elements as are oriented in the Figures. It should be recognized that the orientation of particular components may vary greatly depending on the application in which they are used.

For the purpose of this disclosure, the term "coupled" means the joining of two members directly or indirectly to one another. Such joining may be stationary in nature or moveable in nature. Such joining may be achieved with the two members or the two members and any additional intermediate members being integrally formed as a single unitary body with one another or with the two members or the two members and any additional intermediate members being attached to one another. Such joining may be permanent in nature or may be removable or releasable in nature.

It is also important to note that the construction and arrangement of the system, methods, and devices as shown in the various examples of embodiments is illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.). For example, elements shown as integrally formed may be constructed of multiple parts or elements show as multiple parts may be integrally formed, the operation of the interfaces may be reversed or otherwise varied, the length or width of the structures and/or members or connector or other elements of the system may be varied, the nature or number of adjustment positions provided between the elements may be varied (e.g. by variations in the number of engagement slots or size of the engagement slots or type of engagement). The order or sequence of any process or method steps may be varied or re-sequenced according to alternative embodiments. Other substitutions, modifications, changes and omissions may be made in the design, operating conditions and arrangement of the various examples of embodiments.

While this invention has been described in conjunction with the examples of embodiments outlined above, various alternatives, modifications, variations, improvements and/or substantial equivalents, whether known or that are or may be presently foreseen, may become apparent to those having at least ordinary skill in the art. Accordingly, the examples of embodiments of the invention, as set forth above, are intended to be illustrative, not limiting.

The technical effects and technical problems in the specification are exemplary and are not limiting. It should be noted that the embodiments described in the specification may have other technical effects and can solve other technical problems.

## Claims

1. An electrochemical cell (102) comprising:
- a flat positive plate (104) composed of a positive grid (110) formed of virgin lead or high purity lead or highly purified secondary lead and a positive battery paste (114) disposed on the positive grid (110), the positive battery paste (114) comprising a lead-containing composition, a positive plate paste vehicle, and a polyvinylsulfonate additive, wherein the virgin lead or high purity lead or highly purified secondary lead is in the range of 99.9% to 99.99% lead;
- a flat negative plate (106) composed of a negative grid (112) and a negative battery paste (116) disposed on the negative grid (112), the negative battery paste (116) comprising a lead-containing composition and a negative plate paste vehicle;
- an absorbent glass mat (108) interleaved between the flat positive plate (104) and the flat negative plate (106); and
- an electrolyte (124) in a container (120) and retained in the absorbent glass mat (108), the electrolyte (124) including phosphoric acid, wherein the phosphoric acid is present in the electrolyte (124) in a range of from 0.1 g/L to 0.5 g/L.

2. The electrochemical cell (102) of Claim 1,
wherein the electrolyte (124) further comprises sodium sulfate.

3. The electrochemical cell (102) of Claim 1,
wherein the electrolyte (124) further comprises water, sulfuric acid, and sodium sulfate.

4. The electrochemical cell (102) of one of Claims 1 to 3,
wherein the polyvinylsulfonate additive comprises polyvinylsulfonic acid or salts of this material.

5. The electrochemical cell (102) of one of Claims 1 to 4,
wherein the negative paste (116) further comprises a polyvinylsulfonate additive.

6. The electrochemical cell (102) of one of Claims 1 to 5,
wherein the negative battery paste (116) further comprises an expander.

7. The electrochemical cell (102) of one of Claims 1 to 6,
wherein the positive plate paste vehicle is water.

8. The electrochemical cell (102) of one of Claims 1 to 7,
wherein the negative plate paste vehicle is water.

9. The electrochemical cell (102) of one of Claims 1 to 8,
wherein the negative plate (106) is composed of virgin lead or high purity lead or highly purified secondary lead in the range of 99.9% to 99.99% lead.

10. A lead acid battery comprising:
- a container (120);
- a plurality of electrochemical cells (102) according to one of claims 1 to 9 within the container (120), the plurality of flat positive plates (104) of the electrochemical cells (102) and the plurality of flat negative plates (106) of the electrochemical cells (102) being connected by intercell connectors (122) and coupled to one or more terminals (128); and
- a lid (126) on the container (120).

11. The lead acid battery of claim 10,
wherein negative battery paste (116) further comprises an expander, and a polyvinylsulfonate additive, and wherein the electrolyte (124) further includes water, sulfuric acid, and sodium sulfate.

12. The lead acid battery of Claim 11,
wherein the polyvinylsulfonate additive comprises polyvinylsulfonic acid or salts of this material.

## Patentansprüche

1. Elektrochemische Zelle (102) umfassend:
- eine flache positive Platte (104) bestehend aus einem positiven Gitter (110), das aus nativem Blei oder hochreinem Blei oder hochgereinigtem Sekundärblei gebildet ist, und einer positiven Batteriepaste (114), die auf dem positiven Gitter (110) angeordnet ist, wobei die positive Batteriepaste (114) eine bleihaltige Zusammensetzung, einen Positive-Platte-Pastenträger und einen Polyvinylsulfonat-Zusatzstoff umfasst, wobei das native Blei oder hochreine Blei oder hochgereinigte Sekundärblei in dem Bereich von 99,9 % bis 99,99 % Blei liegt;
- eine flache negative Platte (106) bestehend aus einem negativen Gitter (112) und einer negativen Batteriepaste (116), die auf dem negativen Gitter (112) angeordnet ist, wobei die negative Batteriepaste (116) eine bleihaltige Zusammensetzung und einen Negative-Platten-Pastenträger umfasst;
- eine absorptionsfähige Glasmatte (108), die zwischen der flachen positiven Platte (104) und der flachen negativen Platte (106) eingefügt ist; und
- einen Elektrolyten (124) in einem Behälter (120), der in der absorptionsfähigen Glasmatte (108) gehalten wird, wobei der Elektrolyt (124) Phosphorsäure enthält, wobei die Phosphorsäure in dem Elektrolyten (124) in einem Bereich von 0,1 g/l bis 0,5 g/l vorhanden ist.

2. Elektrochemische Zelle (102) nach Anspruch 1,
wobei der Elektrolyt (124) ferner Natriumsulfat umfasst.

3. Elektrochemische Zelle (102) nach Anspruch 1,
wobei der Elektrolyt (124) ferner Wasser, Schwefelsäure und Natriumsulfat umfasst.

4. Elektrochemische Zelle (102) nach einem der Ansprüche 1 bis 3,
wobei der Polyvinylsulfonat-Zusatzstoff Polyvinylsulfonsäure oder Salze dieses Materials umfasst.

5. Elektrochemische Zelle (102) nach einem der Ansprüche 1 bis 4,
wobei die negative Paste (116) ferner einen Polyvinylsulfonat-Zusatzstoff umfasst.

6. Elektrochemische Zelle (102) nach einem der Ansprüche 1 bis 5,
wobei die negative Batteriepaste (116) ferner einen Expander umfasst.

7. Elektrochemische Zelle (102) nach einem der Ansprüche 1 bis 6,
wobei der Positive-Platte-Pastenträger Wasser ist.

8. Elektrochemische Zelle (102) nach einem der Ansprüche 1 bis 7,
wobei der Negative-Platte-Pastenträger Wasser ist.

9. Elektrochemische Zelle (102) nach einem der Ansprüche 1 bis 8,
wobei die negative Platte (106) aus nativem Blei oder hochreinem Blei oder hochgereinigtem Sekundärblei in dem Bereich von 99,9 % bis 99,99 % Blei besteht.

10. Blei-Säure-Batterie umfassend:
- einen Behälter (120);
- eine Vielzahl von elektrochemischen Zellen (102) nach einem der Ansprüche 1 bis 9 innerhalb des Behälters (120), wobei die Vielzahl von flachen positiven Platten (104) der elektrochemischen Zellen (102) und die Vielzahl von flachen negativen Platten (106) der elektrochemischen Zellen (102) durch Zwischenzellen-Verbindungselemente (122) verbunden und an einen oder mehrere Anschlüsse (128) gekoppelt sind; und
- einen Deckel (126) auf dem Behälter (120).

11. Blei-Säure-Batterie nach Anspruch 10,
wobei negative Batteriepaste (116) ferner einen Expander und einen Polyvinylsulfonat-Zusatzstoff umfasst und wobei der Elektrolyt (124) ferner Wasser, Schwefelsäure und Natriumsulfat enthält.

12. Blei-Säure-Batterie nach Anspruch 11,
wobei der Polyvinylsulfonat-Zusatzstoff Polyvinylsulfonsäure oder Salze dieses Materials umfasst.

## Revendications

1. Cellule électrochimique (102) comprenant :
- une plaque positive plate (104) composée d'une grille positive (110) constituée de plomb de première fusion ou plomb de haute pureté ou plomb de seconde fusion hautement purifié et d'une pâte de batterie positive (114) disposée sur la grille positive (110), la pâte de batterie positive (114) comprenant une composition contenant du plomb, un véhicule de pâte de plaque positive et un additif à base de sulfonate de polyvinyle, le plomb de première fusion ou plomb de haute pureté ou plomb de seconde fusion hautement purifié se situant dans la plage de 99,9 % à 99,99 % de plomb ;
- une plaque négative plate (106) composée d'une grille négative (112) et d'une pâte de batterie négative (116) disposée sur la grille négative (112), la pâte de batterie négative (116) comprenant une composition contenant du plomb et un véhicule de pâte de plaque négative ;
- un mat de verre absorbant (108) intercalé entre la plaque positive plate (104) et la plaque négative plate (106) ; et
- un électrolyte (124) dans un récipient (120) et retenu dans le mat de verre absorbant (108), l'électrolyte (124) comportant de l'acide phosphorique, l'acide phosphorique étant présent dans l'électrolyte (124) dans une plage de 0,1 g/L à 0,5 g/L.

2. Cellule électrochimique (102) selon la revendication 1,
dans laquelle l'électrolyte (124) comprend en outre du sulfate de sodium.

3. Cellule électrochimique (102) selon la revendication 1,
dans laquelle l'électrolyte (124) comprend en outre de l'eau, de l'acide sulfurique, et du sulfate de sodium.

4. Cellule électrochimique (102) selon une des revendications 1 à 3,
dans laquelle l'additif à base de sulfonate de polyvinyle comprend de l'acide polyvinylsulfonique ou des sels de ce matériau.

5. Cellule électrochimique (102) selon une des revendications 1 à 4,
dans laquelle la pâte négative (116) comprend en outre un additif à base de sulfonate de polyvinyle.

6. Cellule électrochimique (102) selon une des revendications 1 à 5,
dans laquelle la pâte de batterie négative (116) comprend en outre un agent d'allongement.

7. Cellule électrochimique (102) selon une des revendications 1 à 6,
dans laquelle le véhicule de pâte de plaque positive est l'eau.

8. Cellule électrochimique (102) selon une des revendications 1 à 7,
dans laquelle le véhicule de pâte de plaque négative est l'eau.

9. Cellule électrochimique (102) selon une des revendications 1 à 8,
dans laquelle la plaque négative (106) est composée de plomb de première fusion ou plomb de haute pureté ou plomb de seconde fusion hautement purifié dans la plage de 99,9 % à 99,99 % de plomb.

10. Batterie au plomb comprenant :
- un récipient (120) ;
- une pluralité de cellules électrochimiques (102) selon une des revendications 1 à 9 à l'intérieur du récipient (120), la pluralité de plaques positives plates (104) des cellules électrochimiques (102) et la pluralité de plaques négatives plates (106) des cellules électrochimiques (102) étant connectées par des connecteurs intercellulaires (122) et couplées à une ou plusieurs bornes (128) ; et
- un couvercle (126) sur le récipient (120).

11. Batterie au plomb selon la revendication 10,
dans laquelle la pâte de batterie négative (116) comprend en outre un agent d'allongement et un additif à base de sulfonate de polyvinyle, et dans laquelle l'électrolyte (124) comporte en outre de l'eau, de l'acide sulfurique et du sulfate de sodium.

12. Batterie au plomb selon la revendication 11,
dans laquelle l'additif à base de sulfonate de polyvinyle comprend de l'acide polyvinylsulfonique ou des sels de ce matériau.
